(19) Europäisches Patentamt
European Patent Office
Office européen des brevets

(11) **EP 1 548 944 B1**

(12) **EUROPEAN PATENT SPECIFICATION**

(45) Date of publication and mention
of the grant of the patent:
**04.06.2008 Bulletin 2008/23**

(51) Int Cl.:
***H03K 19/0185*** *(2006.01)* ***H04L 25/02*** *(2006.01)*

(21) Application number: **04029184.1**

(22) Date of filing: **09.12.2004**

(54) **Receiving device**

Empfangsvorrichtung

Dispositif de réception

(84) Designated Contracting States:
**DE FR GB IT NL**

(30) Priority: **25.12.2003 JP 2003429996**

(43) Date of publication of application:
**29.06.2005 Bulletin 2005/26**

(73) Proprietor: **Seiko Epson Corporation**
**Shinjuku-ku,**
**Tokyo 163-0811 (JP)**

(72) Inventor: **Uematsu, Akira**
**Suwa-shi,**
**Nagano-ken 392-8502 (JP)**

(74) Representative: **Hoffmann, Eckart**
**Patentanwalt,**
**Bahnhofstrasse 103**
**82166 Gräfelfing (DE)**

(56) References cited:
**US-A- 5 111 080       US-A- 5 317 214**
**US-A- 5 578 944       US-A1- 2003 087 671**

• **ULRICH TIETZE, CHRISTOPH SCHENK:**
**"Halbleiter-Schaltungs-technik" 1986,**
**SPRINGER VERLAG , BERLIN HEIDELBERG**
**NEW-YORK (ISBN 3-540-16720-X) 8 ,**
**XP002375174 * page 663; figure 21.32 ***

## Description

The present invention relates to a receiving device for data transfer with a differential-current driven model that uses current as a signal transmission means.

As the operation speed of semiconductor integrated devices or a central processing unit (CPU) and the like that construct electronic apparatuses increases, or the quantity of signals to process rises to mass quantity, there is a growing need to transmit signals in high speed through a transmission line between the electronic apparatuses, or between the circuits that construct the electronic apparatus.

Nowadays, a high-speed interface circuit that uses current as the signal transmission means is being developed, wherein signals are transmitted through a transmission line among the electronic apparatuses, or between the circuits that compose the electronic apparatus, in order to resolve the drawbacks of the occurrence of signal response delay and the like, caused by the capacity constituent of the transmission line in case where the voltage is used as the signal transmission means. For example, the technology called Low Voltage Differential Signaling (LVDS) is being developed (for instance, refer to [1]: JP-A-2001-53598).

This LVDS technology receives signals by driving a constant-current source applied in a sending device with two reverse voltages fluctuating in low voltage (low amplitude), flowing differential current into two transmission lines, and extracting the fluctuation of the differential current that flows as voltage fluctuations in the terminal resistor applied in the receiving device.

However, the electromagnetic property of the wiring will influence the transmission if the wiring length between the circuits that transmit signals is longer than one forth of the wavelength of the high-frequency constituent in the transmitted signal, thus the phenomenon of radiation etc. occurs and waveform deteriorates. In order to avoid this and transmit the signals without waveform deterioration, wiring needs to be designed and constructed as a transmission cable line having a characteristic impedance, and there is a need to terminate the sending circuit side or the receiving circuit side, or both sides, and conduct an impedance matching (for instance, refer to [2]: JP-B-2919012).

As described above, there is a need to terminate the sending circuit side and/or the receiving circuit side and conduct an impedance matching with the characteristic impedance of the transmission cable line. However, since in the receiving part of the interface circuit for data transfer with the differential-current driven model mentioned in [1], the gates of metal oxide semiconductor transistors (MOS transistors) that correspond to the terminal part of the transmission line, are fixed to the electric potential that is biased with constant voltage VB. Thus the input impedance of the receiving part is high, 250 $\Omega$ through 500 $\Omega$. Incidentally, the characteristic impedance Z0 of the transmission line between the sending device and the receiving device in the LVDS is about 50 $\Omega$. In contrast, the matching circuit shown in [2] has a structure wherein a the bipolar transistor is used, and is not related to the device using a MOS transistor. Therefore, in a device such as a semiconductor integrated circuit wherein the MOS transistors are used, it is not easy to match impedance.

US 5,578,944 A discloses a receiving device for data transfer by means of a current transmitted via a transmission line comprising: a receiving node for connection to the first transmission line; impedance matching means connected to the receiving node and including a low impedance circuit means capable of making said input impedance lower than the characteristic impedance of said first transmission line; current-voltage conversion means following said first impedance matching means for converting the current into a corresponding voltage; and a comparator for receiving the voltage and a reference voltage and for outputting the result of comparison of the two voltages as output data.

From the document Ulrich Tietze, Christoph Schenk: "Halbleiter-Schaltungstechnik" 1986, Springer Verlag, Berlin Heidelberg New York (ISBN 3-540-16720-X) 8, *XP002375174* it is known the highest data rates and the longest transmission line lengths can be realized with a symmetric structure that transfers data by means of the difference between a first and a second current transmitted via a first and a second transmission line, respectively.

The present invention is, in light of the above-mentioned problem, intended to provide a receiving device that is able to match the input impedance of the receiving device to the characteristic impedance of the transmission line, even with a receiving device constructed using MOS transistors.

This object is achieved by a receiving device as claimed in claim 1. Preferred embodiments of the invention are subject-matter of the dependent claims.

With the present invention, even with the receiving device constructed using MOS transistor, it is easy to match the input impedance of the receiving device to the characteristic impedance of the transmission line.

With the present invention, even with the semiconductor integrated device that has a slightly different specification in the characteristic impedance of the transmission cable line, it is possible to easily conduct the adjustment by means of a resistor.

Preferred embodiments of the present invention will now be described in detail with reference to the drawings, in which:

FIG. 1 is a schematic view to show the sending and receiving devices of the embodiment 1 of the present invention;

FIG. 2 is a schematic view to show one example of the structure of a low impedance circuit means;

FIG. 3 is a schematic view to show another example of the structure of a low impedance circuit means;

FIG. 4 is a schematic view to show another example of the structure of a low impedance circuit means; and

FIG. 5 is a schematic view to show the sending and the receiving device of the embodiment 2 of the present invention.

## Embodiment 1

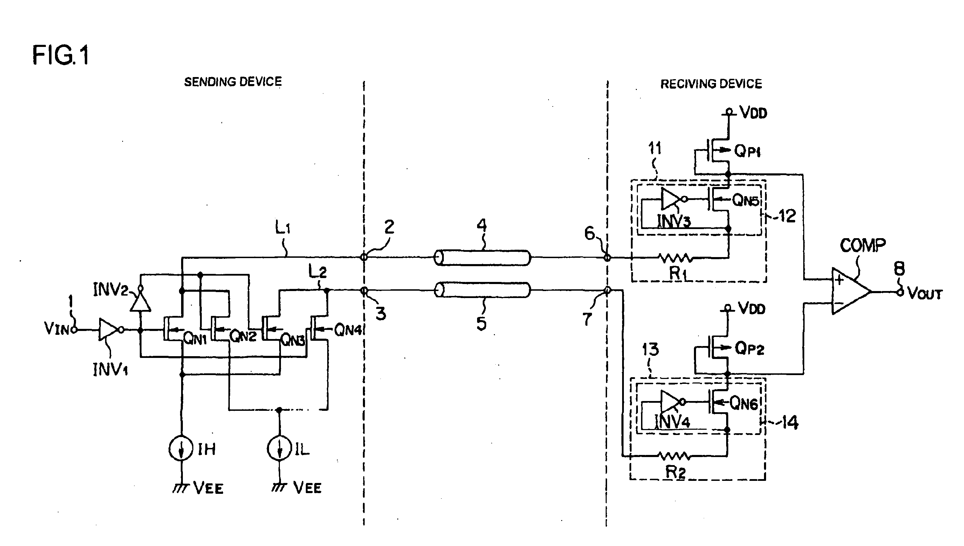

FIG. 1 is a schematic view showing the sending and the receiving device in a first embodiment of the present invention.

In FIG. 1, both the sending and the receiving devices are composed of semiconductor integrated circuits. A data signal $V_{IN}$, '1' or '0', is input into an input terminal 1, and the data signal inverted through an inverter $INV_1$ is input into the gates of negative metal oxide semiconductor transistors (NMOS transistors) $Q_{N1}$ and $Q_{N4}$. The data signal inverted through the inverter $INV_1$ is further inverted through an inverter $INV_2$, and input into the gates of NMOS transistors $Q_{N2}$ and $Q_{N3}$. The sources of NOMS transistors $Q_{N1}$ and $Q_{N3}$ are both connected to a low electric-potential point (reference electric-potential point) VEE via a constant current source IH. The sources of NMOS transistors $Q_{N2}$ and $Q_{N4}$ are both connected to the low electric-potential point (reference electric-potential point) VEE via a constant current source IL. Further, the drains of the NMOS transistors $Q_{N1}$ and $Q_{N2}$ are both connected to an output terminal 2 via a line $L_1$, and the drains of the NMOS transistors $Q_{N3}$ and $Q_{N4}$ are connected to an output terminal 3 via a line $L_2$. Consequently, if the output from the inverter $INV_1$ is '1', the NMOS transistors $Q_{N1}$ and $Q_{N4}$ are turned on concurrently, thus it is possible for the constant current IH to flow from the output terminal 2 in the line $L_1$ to the low electric-potential point VEE through the NMOS transistor $Q_{N1}$, as well as for the constant current IL to flow from the output terminal 3 in the line $L_2$ to the low electric-potential point VEE through the NMOS transistor $Q_{N4}$. Moreover, if the output from the inverter $INV_1$ is '0', the NMOS transistors $Q_{N2}$ and $Q_{N3}$ are turned on concurrently, thus it is possible for the constant current IL to flow from the output terminal 3 in the line $L_2$ to the low electric-potential point VEE through the NMOS transistor $Q_{N2}$, as well as for the constant current IH to flow from the output terminal 3 in the line $L_2$ to the low electric-potential point VEE through the NMOS transistor $Q_{N3}$. That is to say, if the input data signal $V_{IN}$ is '0', then it is possible for the constant currents IH and IL to respectively flow in the lines $L_1$ and $L_2$ (more specifically, transmission lines 4 and 5), and if the input data signal $V_{IN}$ is '1', then it is possible for the constant currents IL and IH to respectively flow in the lines $L_1$ and $L_2$ (more specifically, transmission lines 4 and 5).

The output terminal 2 and the output terminal 3 of the sending device are respectively connected to input terminals 6 and 7 of the receiving device, through the transmission lines 4 and 5. The input terminals 6 and 7 of the receiving device function as receiving nodes (receiving terminals) that receive the differential current signals in reverse phase to each other. The differential current signal pair IH and IL, respectively flowing through the transmission lines 4 and 5, have the same direction of current (the directions in which the currents IH and IL actually flow are both from the receiving device to the sending device), but have a different amount of current. For example, IH is 500μA, and IL is 100μA.

The receiving device is a receiving device for data transfer with the differential-current driven model having: receiving nodes 6 and 7 wherein the differential current signals that are in reverse phase to each other are received; a pair of a positive-phase side and a negative-phase side receiving circuit, respectively connected to the receiving nodes 6 and 7; and a comparator COMP for extracting the fluctuation of the differential current as a voltage fluctuation, by inputting each of the outputs from the positive-phase side and the negative-phase side receiving circuits and comparing them; a comparator output terminal 8.

Both the positive-phase side and the negative-phase side circuit have the same circuit structure. The positive-phase side receiving circuit includes: the receiving node 6 for receiving a positive-phase current signal; a positive metal oxide semiconductor transistor (PMOS transistor) $Q_{P1}$, having a current-voltage conversion function for converting current to a voltage that corresponds to the positive-phase current signal from the receiving node 6; an impedance matching means 11, applied between the receiving node 6 and the PMOS transistor $Q_{P1}$, and matches the input impedance of the receiving node 6 to the characteristic impedance Z0 of the sending side transmission line 4; and a high electric-potential power source VDD line. The characteristic impedance Z0, for example, is 50Ω.

In PMOS transistor $Q_{P1}$, a gate and a drain are commonly connected, and the source is connected to a high electric-potential power source VDD. The current I between the source and the drain is:

$$I = \beta p \ (VDD - VR - Vthp)^2/2,$$

where VR is the drain voltage, βb is the gain factor, and Vthp is the threshold voltage. Therefore, if I = IH, the drain voltage VR of the PMOS transistor $Q_{P1}$ is determined accordingly. More specifically, if the current IH flows, a voltage VR results that depends on the constant parameters βb, VDD and Vthp. In other words, current can be converted to voltage.

The impedance matching means 11 is applied between the receiving node 6 and the PMOS transistor

$Q_{P1}$, and includes a low impedance circuit means 12 that is able to generate a low impedance, as the input impedance of the receiving node 6, which is equal to or lower than the characteristic impedance Z0 of the sending side transmission line 4 that is connected to the receiving node 6, as well as a resistor $R_1$ for compensating the deficiency of impedance necessary for matching, and matches the input impedance to the characteristic impedance Z0 of the sending side transmission line 4.

Similarly, the negative-phase side receiving circuit includes: the receiving node 7 for receiving a negative-phase current signal; a PMOS transistor $Q_{P2}$, having a current-voltage conversion function for converting current to a voltage that corresponds to the negative-phase current signal from the receiving node 7; an impedance matching means 13, applied between the receiving node 7 and the PMOS transistor $Q_{P2}$, and matches the input impedance of the receiving node 7 to the characteristic impedance Z0 of the sending side transmission line 5; and a high electric-potential power source VDD line.

The impedance matching means 13 is applied between the receiving node 7 and the PMOS transistor $Q_{P2}$, and includes a low impedance circuit means 14 that is able to generate a low impedance, as the input impedance of the receiving node 7, which is equal to or lower than the characteristic impedance Z0 of the sending side transmission line 5 that is connected to the receiving node 7, as well as a resistor $R_2$ for compensating the deficiency of impedance necessary for matching, and matches the input impedance to the characteristic impedance Z0 of the sending side transmission line 5.

The comparator COMP is fed the voltage signals as comparison signals from the drains of each of the PMOS transistor $Q_{P1}$ and $Q_{P2}$, and outputs its comparison result as the output data to the output terminal 8.

Hereafter, the low impedance circuit means 12 and the low impedance circuit means 14 are described.

The low impedance circuit means 12 comprises: an NMOS transistor $Q_{N5}$, having a current control function for controlling the current that flows between the drain (and the gate) of the PMOS transistor $Q_{P1}$ and the receiving node 6, with a voltage supplied to the gate; and an inverter $INV_3$, serving as the voltage inversion means, for inverting the source-side voltage of the NMOS transistor $Q_{N5}$, and for feed-backing the inverted voltage to the gate of the NMOS transistor $Q_{N5}$ as a control signal.

The low impedance circuit means 14 comprises: an NMOS transistor $Q_{N6}$, having a current control function for controlling the current that flows between the drain (and the gate) of the PMOS transistor $Q_{P2}$ and the receiving node 7, with a voltage supplied to the gate; and an inverter $INV_4$, serving as the voltage inversion means, for inverting the source-side voltage of the NMOS transistor $Q_{N6}$, and for feed-backing the inverted voltage to the gate of the NMOS transistor $Q_{N8}$ as a control signal.

In the above-mentioned impedance matching means 11, if the required impedance for the impedance matching with transmission line 4 is obtained by the low impedance circuit means 12, the resistor $R_1$ is not specifically necessary. Similarly, in the impedance matching means 13, if the required impedance for the impedance matching with transmission line 5 is obtained by the low impedance circuit means 13, the resistor $R_2$ is not specifically necessary.

However, the above-mentioned impedance matching means 11 may have a structure, where, among the impedances necessary for impedance matching with the transmission line 4, an impedance that is smaller than the impedance necessary for impedance matching with the transmission line 4 is generated by the low impedance circuit means 12, and a deficiency (shortage) of impedance necessary for matching is compensated with the resistor $R_1$. Similarly, the above-mentioned impedance matching means 13 may have a structure, where, among the impedances necessary for impedance matching with the transmission line 5, an impedance that is smaller than the impedance necessary for impedance matching with the transmission line 5 is generated by the low impedance circuit means 14, and a deficiency (shortage) of impedance necessary for matching is compensated with the resistor $R_2$.

Moreover, the above-mentioned impedance matching means 11 may have a structure that makes the impedance generated by the low impedance circuit means 12 be almost zero, and compensates almost the entire impedance necessary for matching with a resistor $R_1$. Similarly, the above-mentioned impedance matching means 13 may have a structure that makes the impedance generated by the low impedance circuit means 14 be almost zero, and compensates almost the entire impedance necessary for matching with a resistor $R_2$.

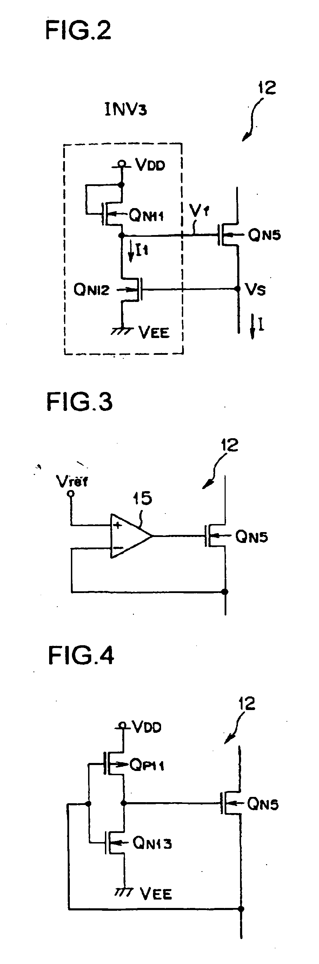

FIG. 2 through FIG. 4 show examples of the structure for the low impedance circuit means 12 (or the low impedance circuit means 14).

In FIG. 2, the inverter $INV_3$ (or the inverter $INV_4$) that inverts the source voltage of the NMOS transistor $Q_{N5}$ that feeds the voltage back to the NMOS transistors $Q_{N5}$, is composed of two NMOS transistors $Q_{N11}$ and $Q_{N12}$, connected in series between the high electric-potential power source VDD and the low electric-potential side power source VEE. The drain and the gate of the NMOS transistor $Q_{N11}$ are commonly connected to the high electric-potential power source VDD. The connecting point of the NMOS transistors $Q_{N11}$ and $Q_{N12}$ is connected to the gate of the NMOS transistor $Q_{N5}$. The source of the NMOS transistor $Q_{N5}$ is connected to the gate of the NMOS transistor $Q_{N12}$. The source of the NMOS transistor $Q_{N12}$ is connected to the low electric-potential side power source VEE. A feedback signal Vf is a voltage signal which a source voltage VS of the $Q_{N5}$ inverted.

The input impedance of the receiving node 6 and the receiving node 7 actually obtained from this composition is around $10\Omega$ through $50\Omega$. Hence in the case where the characteristic impedances Z0 of the transmission lines 4 and 5 are $50\Omega$, and if the input impedance is dropped to 10Ω, the resistance for the resistors $R_1$ and $R_2$ should be set to 40Ω each.

The low impedance circuit means 12 shown in FIG. 3 is structured to use a differential amplifier 15 having negative and positive input terminals, instead of the inverter $INV_3$ shown in FIG. 1. The source voltage of the NMOS transistor $Q_{N5}$ is applied to the negative terminal of the differential amplifier 15, whereas the positive terminal of the differential amplifier 15 is connected to a reference electric-potential source Vref, and an output terminal of the differential amplifier 15 is connected to the gate of the NMOS transistor $Q_{N5}$.

The low impedance circuit means 12 shown in FIG. 4 is structured to use a complementary metal oxide semiconductor (CMOS) inverter composed with a PMOS transistor $Q_{P11}$ and an NMOS transistor $Q_{N13}$ that are connected in series between the high electric-potential power source VDD and the low electric-potential power source VEE, instead of the inverter $INV_3$ shown in FIG. 1. The source voltage of the NMOS transistor $Q_{N5}$ is applied to the common connection gate of the MOS transistors $Q_{P11}$ and $Q_{N13}$ that compose the CMOS inverter. The connecting point (output point) of the MOS transistor $Q_{P11}$ and $Q_{N13}$ is connected to the gate of the NMOS transistor $Q_{N5}$.

With the receiving device of the embodiment 1 of the present invention, it is possible to match the input impedance of the receiving device to the characteristic impedance, even with the receiving device is composed with the MOS transistor.

**The Embodiment 2**

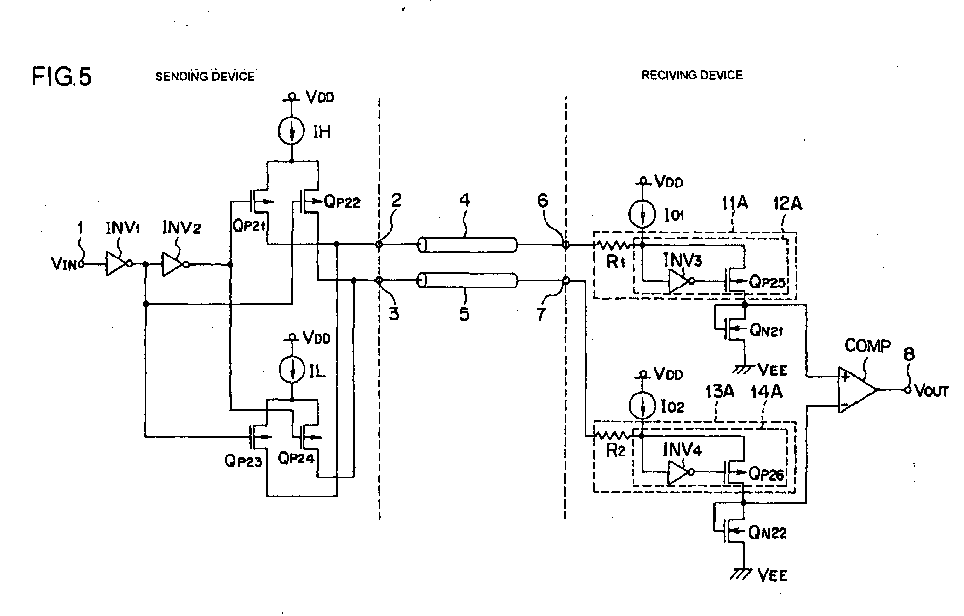

FIG. 5 is a schematic view showing the sending and the receiving device in a second embodiment of the present invention. The same reference signs are used for the same parts used in the context of the embodiment 1.

In the embodiment 2 shown in FIG. 5, the NMOS transistors $Q_{N1}$ through $Q_{N8}$ in FIG.1 are replaced by PMOS transistors $Q_{P21}$ through $Q_{P28}$. and the PMOS transistors $Q_{P1}$ and $Q_{P2}$ are replaced with NMOS transistors $Q_{N21}$ and $Q_{N22}$. Corresponding to this change, the arrangement of the constant-current sources IH and IL changes, hence constant-current sources $I_{01}$ and $I_{02}$ are the required structure in the receiving device. An impedance matching means 11A in the receiving device is composed of the PMOS transistor $Q_{P25}$ that has the current control function, and the inverter $INV_3$ that has the voltage inversion function. An impedance matching means 13A is composed of the PMOS transistor $Q_{P28}$ that has the current control function, and the inverter $INV_4$ that has the voltage inversion function. $Q_{N21}$ and $Q_{N22}$ are the NMOS transistors that structure the current-voltage conversion means.

In the case of the embodiment 2 in FIG. 5, if the data input signal $V_{IN}$ is '0', it is possible for the constant currents IL and IH to flow in the transmission lines 4 and 5 respectively, and if the input signal $V_{IN}$ is '1', it is possible for the constant currents IH and IL to flow in the transmission lines 4 and 5 respectively. The input terminals 6 and 7 of the receiving device function as receiving nodes (receiving terminals) that receive the differential current signals in reverse phase to each other. The differential current signal pair IH and IL, respectively flowing through the transmission lines 4 and 5, have the same direction of current (the currents IH and IL actually flow both from the sending device to the receiving device), but have a different amount of current. For example, IH is 500μA, and IL is 100μA.

With the embodiment 2 of the present invention, in the same way as in the embodiment 1, it is possible to match the input impedance of the receiving device to the characteristic impedance, even with the receiving device is composed with the MOS transistor.

As described above, both of these embodiments showed examples of the structure with semiconductor integrated devices using MOS transistors, yet it is also possible to embody the present invention with semiconductor integrated devices using bipolar transistors.

The present invention is particularly effective in the usage for the sending and receiving devices in semiconductor integrated devices that are driven in high-speed as well as in low voltage.

**Claims**

1. A receiving device for data transfer by means of the difference between a first and a second current transmitted via a first and a second transmission line (4, 5), respectively, comprising:

   a first receiving node (6) for connection to the first transmission line (4);
   a first impedance matching means (11, 11A) connected between the first receiving node (6) and a first current-voltage conversion means ($Q_{P1}$) said first impedance matching means including a low impedance circuit means (12, 12A) capable of making said input impedance lower than the characteristic impedance of said first transmission line (4);
   the first current-voltage conversion means ($Q_{P1}$) for converting the first current into a corresponding first voltage:
   a second receiving node (7) for connection to the second transmission line (5);
   a second impedance matching means (13, 13A) connected between the second receiving node (7) and a second current-voltage conversion means ($Q_{P2}$) said second impedance matching means including a low impedance circuit means (14, 14A) capable of making said input impedance lower than the characteristic impedance of said second transmission line (5);

the second current-voltage conversion means ($Q_{P2}$) for converting the second current into a corresponding second voltage; and

a comparator (COMP) for receiving the first voltage and the second voltage and for outputting the result of comparison of the two voltages as output data,

wherein the first and the second low impedance circuit means (12, 12A, 14, 14A) each comprises:

current control means ($Q_{N5}$, $Q_{N6}$) connected between the current-voltage conversion means ($O_{P1}$. $Q_{P2}$) and the receiving node (6, 7) for controlling the current flowing therebetween; and

voltage inversion means ($INV_3$, $INV_4$) for inverting the output terminal voltage of the current control means ($Q_{N5}$, $Q_{N6}$) at the receiving node side thereof, and supplying the inverted voltage to the current control means ($Q_{N5}$, $Q_{N6}$) as a control signal.

2. The receiving device according to Claim 1, wherein each of the low impedance circuit means (12, 12A, 14, 14A) is connected via a respective resistor ($R_1$ $R_2$) to the respective receiving node (6, 7).

3. The receiving device according to Claim 2, wherein input impedance of each the impedance matching means (11, 11A, 13, 13A) is almost zero, such that the input impedance at each receiving node (6, 7) is mainly determined by the respective resistor ($R_1$, $R_2$)

**Patentansprüche**

1. Empfangsvorrichtung für eine Datenübertragung mittels der Differenz zwischen einem ersten und einem zweiten Strom, die über eine erste bzw. eine zweite Übertragungsleitung (4, 5) übertragen werden, umfassend:

einen ersten Empfangsknoten (6) zum Anschluß an die erste Übertragungsleitung (4);

eine erste Impedanzanpaßeinrichtung (11, 11A), die zwischen den ersten Empfangsknoten (6) und eine erste Strom-Spannungs-Wandlereinrichtung ($Q_{P1}$) der ersten Impedanzanpaßeinrichtung geschaltet ist, wobei die erste Impedanzanpaßeinrichtung Schaltungsmittel (12, 12A) mit niedriger Impedanz enthält, die in der Lage sind, die Eingangsimpedanz niedriger als den Wellenwiderstand der ersten Übertragungsleitung (4) zu machen;

die erste Strom-Spannungs-Wandlereinrichtung ($Q_{P1}$) zur Umsetzung des ersten Stroms in eine entsprechende erste Spannung;

einen zweiten Empfangsknoten (7) zum Anschluß an die zweite Übertragungsleitung (5);

eine zweite Impedanzanpaßeinrichtung (13, 13A), die zwischen den zweiten Empfangsknoten (7) und eine zweite Strom-Spannungs-Wandlereinrichtung ($Q_{P2}$) der zweiten Impedanzanpaßeinrichtung geschaltet ist, wobei die zweite Impedanzanpaßeinrichtung Schaltungsmittel (14, 14A) mit niedriger Impedanz enthält, die in der Lage sind, die Eingangsimpedanz niedriger als den Wellenwiderstand der zweiten Übertragungsleitung (5) zu machen;

die zweite Strom-Spannungs-Wandlereinrichtung ($Q_{P2}$) zur Umwandlung des zweiten Stroms in eine entsprechende zweite Spannung;

einen Komparator (COMP) zum Empfang der ersten Spannung und der zweiten Spannung und zur Ausgabe des Ergebnisses des Vergleichs der beiden Spannungen als Ausgangsdaten,

wobei die ersten und die zweiten Schaltungsmittel (12, 12A, 14, 14A) niedriger Impedanz jeweils enthalten:

Stromsteuermittel ($Q_{N5}$, $Q_{N6}$), die zwischen die Strom-Spannungs-Wandlereinrichtung ($Q_{P1}$, $Q_{P2}$) und den Empfangsknoten (6, 7) zur Steuerung des zwischen ihnen fließenden Stroms geschaltet sind; und

Spannungsinversionsmittel ($INV_3$, $INV_4$) zum Invertieren der Ausgangsanschlußspannung der Stromsteuermittel ($Q_{N5}$, $Q_{N6}$) an deren Empfangsknotenseite und zur Lieferung der invertierten Spannung als Steuersignal an die Stromsteuermittel ($Q_{N5}$, $Q_{N6}$).

2. Empfangsvorrichtung nach Anspruch 1, bei der jede der Schaltungsmittel (12, 12A, 14, 14A) niedriger Impedanz über einen jeweiligen Widerstand ($R_1$, $R_2$) mit dem jeweiligen Empfangsknoten (6, 7) verbunden sind.

3. Empfangsvorrichtung nach Anspruch 2, bei der die Eingangsimpedanz jeder der Impedanzanpaßeinrichtungen (11, 11A, 13, 13A) nahezu Null ist derart, daß die Eingangsimpedanz an jedem Empfangsknoten (6, 7) hauptsächlich durch den jeweiligen Widerstand ($R_1$, $R_2$) bestimmt wird.

**Revendications**

1. Dispositif de réception pour le transfert de données au moyen de la différence entre un premier et un deuxième courant transmis par l'intermédiaire d'une première et d'une deuxième ligne ( 4, 5 ) de transmission respectivement, comprenant :

un premier noeud ( 6 ) de réception pour se connecter à la première ligne ( 4 ) de transmission ;

un premier moyen ( 11, 11A ) d'adaptation d'impédance, monté entre le premier noeud ( 6 ) de réception et un premier moyen ( $Q_{P1}$ ) de conversion courant-tension, le premier moyen d'adaptation d'impédance comprenant un moyen ( 12, 12A ) de circuit à basse impédance apte à rendre l'impédance d'entrée plus petite que l'impédance caractéristique de la première ligne ( 4 ) de transmission ;

le premier moyen ( $Q_{P1}$ ) de conversion courant-tension pour transformer le premier courant en une première tension correspondante ;

un deuxième noeud ( 7 ) de réception pour se connecter à la deuxième ligne ( 5 ) de transmission ;

un deuxième moyen ( 13, 13A ) d'adaptation d'impédance, monté entre le deuxième noeud ( 7 ) de réception et un deuxième moyen ( $P_{P2}$ ) de conversion courant-tension, le deuxième moyen d'adaptation d'impédance comprenant un moyen ( 14, 14A ) de circuit à basse impédance, apte à rendre l'impédance d'entrée plus petite que l'impédance caractéristique de la deuxième ligne ( 5 ) de transmission ;

le deuxième moyen ( $Q_{P2}$ ) de conversion courant-tension pour transformer le deuxième courant en une deuxième tension correspondante ; et

un comparateur ( COMP ) pour recevoir la première tension et la deuxième tension et pour sortir le résultat de la comparaison des deux tensions comme donnée de sortie,

dans lequel les premier et deuxième moyens ( 12, 12A, 14, 14A ) de circuit à basse impédance comprennent chacun :

un moyen ( $Q_{N5}$, $Q_{N6}$ ) de commande de courant, monté entre le moyen ( $Q_{P1}$, $Q_{P2}$ ) de conversion courant-tension et le noeud ( 6, 7 ) de réception pour commander le courant passant entre eux ; et

un moyen ( $INV_3$, $INV_4$ ) d'inversion de tension, pour inverser la tension de borne de sortie du moyen ( $Q_{N5}$, $Q_{N6}$ ) de commande de courant sur son côté de noeud de réception et pour fournir la tension inversée au moyen ( $Q_{N5}$, $Q_{N6}$ ) de commande de courant en tant que signal de commande.

2. Dispositif de réception suivant la revendication 1, dans lequel chacun des moyens ( 12, 12A, 14, 14A ) de circuit à basse impédance est relié par une résistance ( $R_1$, $R_2$ ) respective au noeud ( 6, 7 ) de réception respectif.

3. Dispositif de réception suivant la revendication 2, dans lequel l'impédance d'entrée de chacun des moyens ( 11, 11A, 13, 13A ) d'adaptation d'impédance est presque nulle, de sorte que l'impédance d'entrée à chaque noeud ( 6, 7 ) de réception est déterminée principalement par la résistance ( $R_1$, $R_2$ ) respective.

FIG.1

SENDING DEVICE

RECIVING DEVICE

EP 1 548 944 B1

## FIG.2

## FIG.3

## FIG.4

FIG.5

SENDING DEVICE

RECIVING DEVICE

COMP 8 Vout

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001053598 A
- JP 2919012 B

- US 5578944 A

### Non-patent literature cited in the description

- **ULRICH TIETZE ; CHRISTOPH SCHENK.** Halbleiter-Schaltungstechnik. Springer Verlag, 1986, 8